# EUROPÄISCHE PATENTSCHRIFT

(11) **EP 2 108 863 B1**
(45) Veröffentlichungstag und Bekanntmachung des Hinweises auf die Patenterteilung: **28.09.2011**
(21) Anmeldenummer: 08103479.5
(22) Anmeldetag: 10.04.2008
(51) Int. Cl.: F16H 59/20, G05G 5/03, B60K 26/02

(54) **Kick-down -Element für einen Fahrpedalgeber**
Kick down element for a travel speed controller
Elément kick down pour une pédale d'accélérateur

(43) Veröffentlichungstag der Anmeldung: 14.10.2009
(73) Patentinhaber: Hella KGaA Hueck & Co., 59552 Lippstadt (DE)
(72) Erfinder: Berglar, Heinrich, 59510 Lippetal (DE)

(56) Entgegenhaltungen:
- WO-A-02/39202
- DE-A1- 19 630 156
- DE-A1-102004 027 499
- DE-C1- 19 521 821

## Beschreibung

Die Erfindung betrifft ein Kick-Down Element für einen Fahrpedalgeber gemäß dem Oberbegriff des Anspruchs 1. Dies Dokument WO 0239202 A2. zeigt den nächstleigenden Stand der Technik mit allen Merkmalen des Oberbegriffs.

Solche Kick-Down Elemente werden in Kraftfahrzeugen mit Automatikgetriebe eingesetzt, um durch einen Kraftsprung einem Fahrer über seinen Fuß ein haptisches Signal zu geben, sobald eine Kick-Down Stellung eines zugeordneten Fahrpedalgebers erreicht oder überschritten ist. Das Kick-Down Element weist keine elektrische Funktion auf und hat auch keinen direkten Einfluss auf das Getriebe; vielmehr wird das Schalten des Getriebes durch andere Bauteile des Fahrpedalgebers gesteuert.

Aus der DE 10 2004 060 482 A1 ist ein Kick-Down Element für einen Fahrpedalgeber bekannt, bei dem ein Träger gegen ein Gehäuse verschiebbar an letzterem befestigt ist. Zwischen dem Träger und dem Gehäuse befindet sich eine Anordnung zur Erzeugung eines Kraftsprungs, die Arme mit zugeordneten Andruckflächen umfasst. Die Andruckflächen weisen unterschiedliche Konturen auf. Der Verschiebeweg zwischen dem Gehäuse und dem Träger und somit ein weiterer Pedalweg in Richtung Vollgas nach dem Kraftsprung, ein so genannter Überweg, ist sehr gering.

Die EP 748 713 B1 beschreibt eine Fahrpedaleinrichtung, in der eine Kick-Down Vorrichtung angeordnet ist. Diese umfasst ein Kick-Down Element, in das in einer Vollgasstellung der Fahrpedaleinrichtung eine an einem Hebel befestigte Nase eingreift und so den Kraftsprung erzeugt. Der Kraftsprung ist weniger steil. Ein weiterer Pedalweg nach dem Kraftsprung ist kurz.

Für bestimmte Anwendungen ist es erforderlich, dass ein Kick-Down Element einen langen Überweg aufweist. Solche Kick-Down Elemente sind bisher nicht bekannt. Aufgabe der Erfindung ist es, ein Kick-Down Element zu schaffen, das bei Einhaltung einer einfachen Bauform einen scharfen Kraftsprung aufweist und nach dem Kraftsprung noch einen relativ langen Pedalweg in Richtung Vollgas - also einen langen Überweg - erlaubt.

Die Aufgabe ist durch die Merkmale des Anspruchs 1 gelöst. In dem Gehäuse ist als Auslöser für einen Kraftsprung ein Hebelarm an seinem dem ersten Ende gegenüber liegenden zweiten Ende drehbar gelagert. Durch den in etwa kreisförmigen Weg, den der Hebel bei einer Betätigung zurücklegt, sind relativ lange Strecken auf kleinem Raum möglich, so dass das Kick-Down Element trotz des ermöglichten langen Wegs sehr kompakt gestaltet sein kann. Durch eine entsprechende Ausgestaltung des ersten Endes und einer zugeordneten Innenfläche des Gehäuses ist ein scharfer Kraftsprung gewährleistet. Das Kick-Down Element ist aus nur drei einfachen Teilen aufgebaut, an die keine hohen Anforderungen bezüglich der Toleranzen zu stellen sind. Daher ist das Kick-Down Element insgesamt preiswert herstellbar.

Die Unteransprüche betreffen die vorteilhafte Ausgestaltung der Erfindung.

Der Hebelarm ist zusätzlich verschiebbar gelagert. Dies wird z.B. dadurch erreicht, dass eine Drehwelle des Hebelarms in einem Langloch gelagert ist. Hierdurch ist eine besonders günstige Kraft- Weg- Kurve einstellbar.

Eine Schraubenfeder als elastisches Element ist einfach und gewährleistet bei entsprechender Verstellung sowohl longitudinale als auch radiale Rückstellkräfte.

An dem ersten Ende des Hebelarms ist eine Nase angeordnet, die zu einer benachbarten Gehäusewand weist, wobei die Nase in einer Ruhestellung des Hebelarms in einer in dem Gehäuse angeordneten Aussparung gelagert ist. Dies erlaubt den scharfen Kraftsprung bei einer auf dem weiteren Weg relativ geringen Reibung.

Der in etwa L-förmige Hebelarm erlaubt eine sichere und einfache Halterung der Schraubenfeder.

Die Ausbildung einer Gleitbahn des Gehäuses im Querschnitt in Form eines Ellipsenbogens bewirkt einen gewünschten Kraft-Weg- Verlauf nach dem Kraftsprung.

Anhand der beigefügten Zeichnungen wird die Erfindung nachfolgend näher erläutert. Dabei zeigt:
- Fig. 1: einen Querschnitt durch ein Kick-Down Element in Ruhestellung und
- Fig. 2: einen Querschnitt durch ein Kick-Down Element in Vollgasstellung.

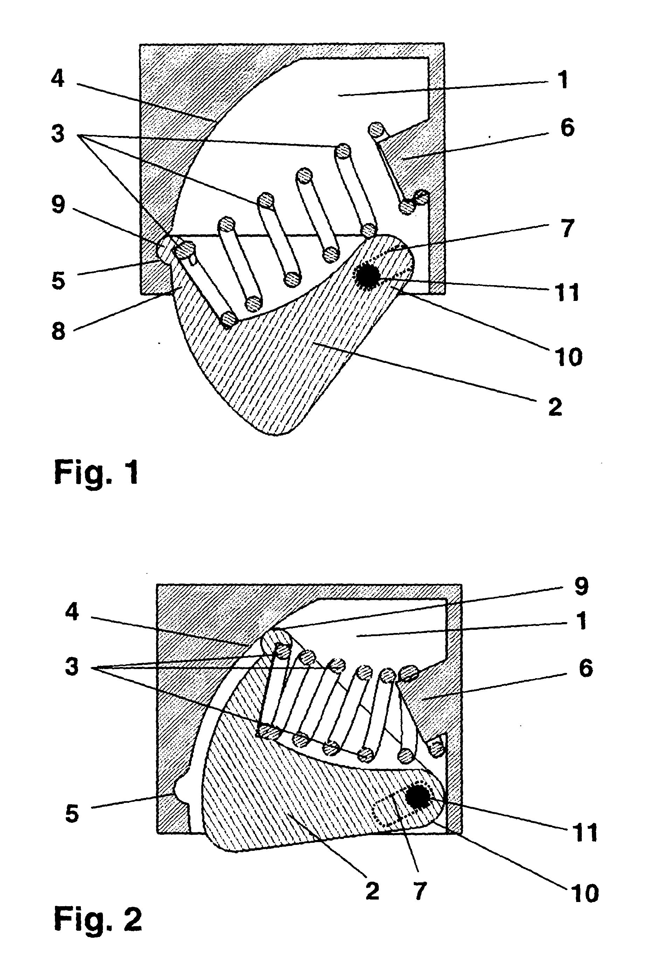

Wie aus den Figuren 1 und 2 ersichtlich umfasst ein Kick-Down Element gemäß der Erfindung im Wesentlichen ein Gehäuse 1, einen Auslöser für einen Kraftsprung, der als Hebelarm 2 ausgebildet ist, und ein elastisches Element in Form einer Spiralfeder 3.

Das Gehäuse 1 ist quaderförmig, wobei eine schmale, in den Figuren nach unten weisende Längsseite offen ist. Eine linke Innenwand des Gehäuses 1 ist als Gleitbahn 4 ausgebildet und weist im Querschnitt die Form eines Ellipsenbogens auf. Die Gleitbahn 4 verläuft von unten links nahe der linken Außenwand des Gehäuses 1 nach oben rechts bis kurz vor die Mitte der oberen Wand des Gehäuses 1. In die Gleitbahn 4 ist in der Nähe ihres unteren Endes eine Nut 5 mit halbkreisförmigem Querschnitt eingelassen.

An einer der Gleitbahn 4 gegenüberliegenden Wand ist in etwa zentrisch ein dornförmiger Halter 6 für die Spiralfeder 3 angeordnet. Der Halter 6 weist einen kreisförmigen Querschnitt auf und bildet mit der zugeordneten Wand einen spitzen Winkel von 35° bis 45°, so dass der Halter 6 schräg nach unten weist. Ein Durchmesser des Halters 6 ist auf einen Innendurchmesser der Spiralfeder 3 abgestimmt.

In jede der Wände des Gehäuses 1, die parallel zur Bildebene der Figuren ist, ist an der der Nut 5 gegenüber liegenden Seite ein Langloch 7 eingelassen. Die Langlöcher 7 verlaufen ausgehend von der rechten Wand und in Höhe der Nut 5 schräg unter einem Winkel von circa 35° nach links unten. Die Breitseiten der Langlöcher 7 sind halbkreisförmig gerundet. Die Länge jedes Langlochs 7 entspricht in etwa seiner doppelten Breite.

In dem Gehäuse 1 ist der Hebelarm 2 drehbar und verschiebbar in den Langlöchern 7 gelagert. Der Hebelarm 2 ist in etwa L-förmig, wobei eine zwischen den Schenkeln gebildete Spitze des L in Ruhestellung des Kick-Down Elements nach unten weist. Die Spitze ist gerundet. Um die erforderliche Stabilität des Hebelarms 2 zu erreichen, ist dieser mit relativ großen Querschnitten und in der Ansicht gezeigten großen Flächen ausgebildet. Ein erstes Ende 8 des Hebelarms 2 liegt an der Gleitbahn 4 an. An dem ersten Ende 8 ist eine Nase 9 mit halbkreisförmigem Querschnitt entsprechend dem Querschnitt der Nut 5 ausgebildet. Die Nase 9 weist zu der Gleitbahn 4 und rastet in der Ruhestellung des Kick-Down Elements in der Nut 5. Ein wesentlicher Teil des Hebelarms 2 ragt hierbei aus dem Gehäuse 1 nach unten heraus.

Ein zweites Ende 10 des Hebelarms 2 liegt dem ersten Ende 8 gegenüber und ist dreh- und verschiebbar in dem Gehäuse 1 gelagert. Hierfür ist an dem zweiten Ende 10 eine Welle 11 angeordnet, die in den Langlöchern 7 geführt ist. Die Welle 11 ist z.B. durch Zapfen gebildet, die auf beiden Seitenflächen des Hebelarms 2 einstückig mit diesem angeformt sind. Ein Durchmesser der Zapfen entspricht der Breite der Langlöcher 7.

Zwischen der rechten Innenwand des Gehäuses 1 und dem dem ersten Ende 8 zugeordneten Schenkel des Hebelarms 2 ist die Spiralfeder 3 eingespannt. Sie ist hierfür in diesem Schenkel in einer entsprechenden Aussparung und an dem Halter 6 geführt, so dass ein Verrutschen der Spiralfeder 3 verhindert ist.

Im normalen Fahrbetrieb ist das Kick-Down Element in der Ruhestellung. Sobald ein Fahrer stark beschleunigen will, tritt er das Fahrpedal entsprechend stark durch. Hierdurch gelangt die aus dem Gehäuse 1 herausragende Spitze des Hebelarms 2 gegen eine nicht dargestellte Platte und wird in das Gehäuse gedrückt. Die bewirkt, dass der Hebelarm 2 zum einen um die Welle 11 gegen die Kraft der Spiralfeder 3 nach oben gedreht wird, wobei die Nase 9 aus der Nut 5 gedrückt wird. Hierdurch wird der Hebelarm 2 zum anderen zusätzlich gegen die Kraft der Spiralfeder 3 nach rechts verschoben. Da die Nase 9 in der Ruhestellung formschlüssig in der Nut 5 war, bewirkt das Ausdrücken der Nase 9 aus der Nut 5 einen großen Kraftsprung, den der Fahrer in seinem Fuß spürt. Auf diese Weise wird dem Fahrer haptisch der Eintritt der Kick-Down Funktion mitgeteilt. Nach dem erfolgten Kraftsprung ist das Fahrpedal noch weiter durchtretbar, wobei die Nase 5 entlang der Gleitbahn 4 nach oben bis zu einem maximalen Vollgas- Ausschlag gleitet. Dieser Vollgas- Ausschlag ist für das Kick-Down Element in der Figur 2 dargestellt.

Sobald der Fahrer den Druck auf das Fahrpedal nachlässt, wird der Hebelarm 2 durch die Kraft der Spiralfeder 3 zurück in die Ruhestellung gebracht.

## Patentansprüche

1. Kick-Down Element für einen Fahrpedalgeber
mit einem Gehäuse (1),
mit einem in dem Gehäuse (1) verschiebbar gelagerten Auslöser (2),
wobei ein erstes Ende (8) des Auslösers (2) durch ein elastisches Element (3) gegen das Gehäuse (1) gedrückt ist,
**dadurch gekennzeichnet, dass** der Auslöser ein Hebelarm (2) ist, der an einem dem ersten Ende (8) gegenüber liegenden zweiten Ende (10) drehbar in dem Gehäuse (1) gelagert ist.

2. Kick-Down Element nach Anspruch 1, **dadurch gekennzeichnet, dass** der Hebelarm (2) zusätzlich verschiebbar gelagert ist.

3. Kick-Down Element nach Anspruch 1 oder 2, **dadurch gekennzeichnet, dass** das elastische Element eine Schraubenfeder (3) ist.

4. Kick-Down Element nach einem der Ansprüche 1 bis 3, **dadurch gekennzeichnet, dass** an dem ersten Ende (8) des Hebelarms (2) eine Nase (9) angeordnet ist, die zu einer benachbarten, als Gleitbahn (4) ausgebildeten Wand desGehäuses (1) weist, wobei die Nase (9) in einer Ruhestellung des Hebelarms (2) in einer in der Gleitbahn (4) angeordneten Nut (5) gelagert ist.

5. Kick-Down Element nach einem der Ansprüche 1 bis 4, **dadurch gekennzeichnet, dass** der Hebelarm (2) im Längsschnitt in etwa L-förmig ist.

6. Kick-Down Element nach einem der Ansprüche 1 bis 3, **dadurch gekennzeichnet, dass** eine Gleitbahn (4) des Gehäuses (1) im Querschnitt in Form eines Ellipsenbogens ausgebildet ist.

## Claims

1. Kick-down element for a pedal sensor
With a housing (1),
with a release (2) which is supported shiftably in the housing (1),
wherein a first end (8) of the release (2) is pressed against the housing (1) by means of an elastic element (3),
**characterized in that** the release is a lever arm (2) which is pivot-mounted in the housing (1) on a second end (10) opposite from the first end (8).

2. Kick-down element according to claim 1, **characterized in that** the lever arm (2) is supported shiftably in addition.

3. Kick-down element according to claim 1 or 2, **characterized in that** the elastic element is a helical spring (3).

4. Kick-down element according to one of the claims 1 to 3, **characterized in that** at the first end (8) of the lever arm (2), a projection (9) is arranged, which points to a neighboring wall of the housing (1) being formed as a sliding guide (4), wherein the projection (9), in an idle position of the lever arm (2), is supported in a groove (5) positioned in the sliding guide (4).

5. Kick-down element according to one of the claims 1 to 4, **characterized in that** the lever arm (2) is approximately L-shaped in its longitudinal section.

6. Kick-down element according to one of the claims 1 to 3, **characterized in that** a sliding guide (4) of the housing (1) has a cross-section in the shape of an ellipsoid curve.

## Revendications

1. Elément point dur pour un capteur de position de pédale avec un boîtier (1),
avec un déclencheur (2) monté sur palier de manière déplaçable dans le boîtier (1), un premier bout (8) du déclencheur (2) étant poussé contre le boîtier (1) par un élément élastique (3), **caractérisé en ce que** le déclencheur est un bras de levier (2) qui est pivotant dans le boîtier (1) au deuxième bout (10) en face du premier bout (8).

2. Elément point dur selon la revendication 1, **caractérisé en ce que** le bras de levier (2) est additionnellement monté sur palier de manière déplaçable.

3. Elément point dur selon la revendication 1 ou 2, **caractérisé en ce que** l'élément élastique est un ressort à boudin (3).

4. Elément point dur selon l'une des revendications 1 à 3, **caractérisé en ce qu'**un nez (9) est disposé sur le premier bout (8) du bras de levier (2) qui s'oriente vers une paroi voisine du boîtier (1) en forme de glissière (4), le nez (9) étant monté sur palier dans une position de repos du bras de levier (2) dans une rainure (5) disposée dans la glissière (4).

5. Elément point dur selon l'une des revendications 1 à 4, **caractérisé en ce que** le bras de levier (2) est en forme de L en section longitudinale.

6. Elément point dur selon l'une des revendications 1 à 3, **caractérisé en ce qu'**une glissière (4) du boîtier (1) est réalisée en section sous forme d'une courbe elliptique.
